# EUROPÄISCHE PATENTANMELDUNG

(11) **EP 1 020 318 A2**
(43) Veröffentlichungstag der Anmeldung: **19.07.2000**
(21) Anmeldenummer: 99125013.5
(22) Anmeldetag: 15.12.1999
(51) Int. Cl.: B60L 11/12, B60K 6/04

(54) **Antriebsvorrichtung für ein Hybridsystem, insbesondere für Fahrzeuge**

(30) Priorität: 16.12.1998 DE 29822419 U
(71) Anmelder: Voith Turbo GmbH & Co. KG, 89522 Heidenheim (DE)
(72) Erfinder: Mühlberger, Uwe, 89522 Heldenheim (DE); Müller, Robert, Dr., 89407 Dillingen (DE); Lange, Andreas, 89551 Zang (DE)
(74) Vertreter: Dr. Weitzel & Partner

(57) **Zusammenfassung**

Die Erfindung betrifft eine Antriebsvorrichtung für einen Hybridantrieb, insbesondere für Fahrzeuge
- mit einer, mit einer Verbrennungskraftmaschine (6) mechanisch wenigstens mittelbar koppelbaren als Generator betreibbaren elektrischen Maschine (5);
gekennzeichnet durch die folgenden Merkmale:
- die elektrische Maschine ist als permanent magneterregte Maschine ausgeführt;
- zwischen der Verbrennungskraftmaschine und der elektrischen Maschine ist eine Drehzahl-/Drehomomentenwandlungseinrichtung (8) vorgesehen, welche eine Übersetzung der Abtriebsdrehzahl der Verbrennungskraftmaschine gegenüber der Antriebsdrehzahl des Generators ins Schnelle bewirkt.

## Beschreibung

Die Erfindung betrifft eine Antriebsvorrichtung für einen Hybridantrieb, insbesondere für den Einsatz in Fahrzeugen, insbesondere für Nutzfahrzeuge und Stadtbusse, im einzelnen mit den Merkmalen aus dem Oberbegriff des Anspruchs 1.

Aus dem Sonderdruck G 1401 der J. M. Voith GmbH ist ein dieselelektrisches Antriebssystem für Nutzfahrzeuge, insbesondere für Stadtbusse, bekannt. Diese umfaßt mindestens einen, mit einem Antriebsrad wenigstens mittelbar gekoppelten und als sogenannter Radmotor fungierenden Elektromotor, welcher vorzugsweise als Transversalflußmaschine ausgeführt ist, der jeweils von einer Wechselrichtereinheit mit elektrischer Leistung versorgt wird. Des weiteren ist eine als Generator betreibbare elektrische Maschine vorgesehen, welche ebenfalls vorzugsweise als Transversalflußmaschine ausgeführt sein kann, die mechanisch mit einer Verbrennungskraftmaschine, insbesondere einem Dieselmotor, koppelbar ist. Zur Erzeugung der elektrischen Leistung wird die als Generator betreibbare elektrische Maschine durch einen 4-Quadranten-Wechselrichter angesteuert. Für die Vorgabe der Sollwerte der Radmotoren sowie die Drehzahlsteuerung des Dieselmotors ist in der Regel eine übergeordnete Fahrsteuerung vorgesehen. Die als Generator betreibbare elektrische Maschine wird wenigstens im Fahrbetrieb, d.h. bei gewünschter Kraftflußrichtung, von der Verbrennungskraftmaschine zu den Antriebsrädern als Generator betrieben. Daher wird diese nachfolgend auch nur als Generator bezeichnet.

Die Wechselrichter für die den Antriebsrädern zugeordneten Elektromotoren und dem Generator sind über einen Spannungszwischenkreis in Form eines Gleichspannungszwischenkreises miteinander gekoppelt. Hierbei besteht auch die Möglichkeit, diese Wechselrichter in einer einzigen Baugruppe zusammenzufassen.

Bei den auf dieser Grundlage aufgebauten dieselelektrischen Antriebssystemen sind in der Regel die als Generator betreibbaren elektrischen Maschinen direkt im Bereich des Dieselmotors angeordnet bzw. an diesem angebaut. Die direkte Kopplung zwischen dem Dieselmotor und der als Generator betreibbaren elektrischen Maschine erfordert den Einsatz elektrischer Maschinen für große Drehmomente. Elektrische Maschinen in Form von permanent erregten Generatoren mit einem guten Wirkungsgrad sind jedoch für diese Anwendung nicht geeignet, da zur Erfüllung des Erfordernisses eines optimalen Wirkungsgrades diese sehr groß bauen müssen und damit schwer sind und dementsprechend teuer.

Der Erfindung liegt daher die Aufgabe zugrunde, ein Antriebssystem der eingangs genannten Art derart weiterzuentwickeln, daß die genannten Nachteile vermieden werden und permanent magneterregte elektrische Maschinen als Generator eingesetzt werden können, welche mit gutem Wirkungsgrad arbeiten und deren Einsatz aus ökonomischer Sicht vertretbar ist. Im einzelnen sollen die als Generator betreibbaren elektrischen Maschinen klein bauen und den Vorteil des guten Wirkungsgrades nutzen.

Die erfindungsgemäße Lösung ist durch die Merkmale des Anspruchs 1 charakterisiert. Vorteilhafte Ausgestaltungen sind in den Unteransprüchen wiedergegeben.

Erfindungsgemäß ist vorgesehen, bei einer Antriebsvorrichtung mit einer, mit einer Verbrennungskraftmaschine mechanisch wenigstens mittelbar koppelbaren und im Traktionsbetrieb als Generator betreibbaren elektrischen Maschine, welche als permanent magneterregte Maschine ausgeführt ist, zwischen dieser und der Verbrennungskraftmaschine eine Drehzahl/Drehmomentenwandlungseinrichtung anzuordnen, welche eine Übersetzung der Abtriebsdrehzahl der Verbrennungskraftmaschine zur Antriebsdrehzahl der als Generator betreibbaren elektrischen Maschine ins Schnelle bewirkt. Die Drehzahl-/Drehmomentenwandlungseinrichtung übernimmt somit die Funktion eines Hochsetzgetriebes, welches die Dieselmotorendrehzahl ins Schnelle übersetzt und das Drehmoment entsprechend der Übersetzung reduziert. Diese Lösung bietet den Vorteil, daß als Generator betreibbare elektrische Maschinen mit geringem Bauraumbedarf zum Einsatz gelangen können, da das vom Generator aufnehmbare Drehmoment neben der Stromstärke im Läufer, dem magnetischen Fluß, von den Abmessungen der Maschine abhängig ist. Gleiche Leistungen gegenüber konventionell aufgebauten Antriebsvorrichtungen mit einer mechanisch mit einer Verbrennungskraftmaschine koppelbaren elektrischen Maschine können somit mit kleineren Baueinheiten vom Generator aufgenommen werden.

Für die Ausführung der Drehzahl-/Drehmomentenwandlungseinrichtung bestehen eine Vielzahl von Möglichkeiten. Vorzugsweise ist diese als mechanische Drehzahl-/Drehmomentenwandlungseinrichtung ausgeführt. Einfach aufgebaute und standardisiert ausführbare mechanische Drehzahl/Drehmomentenwandlungseinrichtungen können dabei beispielsweise im einfachsten Fall folgende Elemente umfassen:
a) wenigstens einen Planetenradsatz und/oder
b) wenigstens eine Stirnradstufe

Denkbar sind auch Ausführungen entsprechend den für die Antriebsvorrichtung vorhandenen Einbaubedingungen mit einer Kombination mehrerer mechanischer Getriebeelemente.

Neben der Funktion der Übersetzung ins Schnelle der Abtriebsdrehzahl der Verbrennungskraftmaschine zur Antriebsdrehzahl der als Generator betreibbaren elektrischen Maschine kann die Drehzahl/Drehmomentenwandlungseinrichtung weitere Funktionen übernehmen.

Diesbezüglich ist die Drehzahl-/Drehmomentenwandlungseinrichtung zu modifizieren. Eine mögliche Modifikation besteht darin, die Drehzahl/Drehmomentenwandlungseinrichtung als Verteilergetriebe auszuführen, welche einen ersten Abtrieb zur Realisierung der Übersetzung ins Schnelle aufweist, der mit der als Generator betreibbaren elektrischen Maschine koppelbar ist. Der zweite Abtrieb der Drehzahl/Drehmomentenwandlungseinrichtung kann dann beispielsweise zusätzlich für den Antrieb von Nebenaggregaten verwendet werden.

Weitere zusätzliche Elemente, welche der Drehzahl/Drehmomentenwandlungseinrichtung zuordenbar sind, sind:
a) Kupplungseinrichtungen, insbesondere schaltbare Kupplungen
b) Einrichtungen zur Schwingungsdämpfung/Tilgung

Die zusätzlichen Komponenten können dabei mit den Elementen der Drehzahl-/Drehmomentenwandlungseinrichtung, welche die Übersetzung ins Schnelle bewirken, eine bauliche Einheit bilden. Vorzugsweise sind diese dann in einem gemeinsamen Gehäuse mit den Elementen der Drehzahl/Drehmomentenwandlungseinrichtung untergebracht. Eine andere Möglichkeit besteht darin, die Kupplungseinrichtungen in Kraftflußrichtung von der Verbrennungskraftmaschine zu der als Generator betreibbaren elektrischen Maschine der Drehzahl-/Drehmomentenwandlungseinrichtung vor- oder nachzuschalten. Diese Aussage gilt auch für die Mittel zur Schwingungstilgung bzw. -dämpfung. Eine Anordnung in Kraftflußrichtung von der Verbrennungskraftmaschine zu der als Generator betreibbaren elektrischen Maschine betrachtet, hinter der Drehzahl/Drehmomentenwandlungseinrichtung, wird vorzugsweise für Antriebssysteme eingesetzt, bei welchen über die Verbrennungskraftmaschine gleichzeitig ein Antrieb von Nebenaggregaten erfolgt und eine Kraftflußunterbrechung von der Verbrennungskraftmaschine zum Generator gewünscht wird, da beispielsweise die in einem Fahrzeug als Radantriebsmotoren fungierenden Elektromotoren im Bremsbetrieb als Generator betrieben werden und ein Antrieb der als Generator betreibbaren elektrischen Maschine nicht gewünscht wird.

Andererseits ergeben sich weitere Möglichkeiten beim Einsatz in einem Antriebssystem, bei welchem wenigstens ein, mit wenigstens einem Antriebsrad wenigstens mittelbar koppelbarer Elektromotor vorgesehen ist, der elektrisch mit der als Generator betreibbaren elektrischen Maschine über einen Spannungszwischenkreis gekoppelt ist, für die Realisierung unterschiedlichster Antriebskonzepte beispielsweise im Bremsbetrieb, in welchem die mit dem Antriebsrad wenigstens mittelbar koppelbaren Elektromotoren in der Regel als Generator betrieben werden und Bremsleistung in den Spannungszwischenkreis einspeisen. Diese in den Spannungszwischenkreis eingespeiste Bremsleistung kann auf unterschiedliche Art und Weise genutzt werden, beispielsweise in eine Energiespeichereinrichtung, welche mit dem Spannungszwischenkreis gekoppelt ist, eingespeist werden, oder aber der als Generator betreibbare elektrische Maschinen zugeführt werden, welche wiederum beispielsweise über die Kopplung mit dem Verteilergetriebe Nebenaggregate antreiben kann. Durch einfache Modifizierung der Drehzahl/Drehmomentenwandlungseinrichtung zur erfindungsgemäßen Übersetzung ins Schnelle der Antriebsdrehzahl der als Generator betreibbaren elektrischen Maschine können somit eine Vielzahl von zusätzlichen Funktionen erfüllt werden, ohne daß der Aufwand für die Realisierung dieser Funktionen besonders hoch wäre.

Eine weitere Möglichkeit und vorteilhafte Ausführung der erfindungsgemäßen Lösung besteht darin, die Drehzahl-/Drehmomentenwandlungseinrichtung derart mit der als Generator betreibbaren elektrischen Maschine zu koppeln, daß diese in einer Baueinheit zusammenfaßbar sind. Dies Baueinheit kann standardisiert vorgefertigt als handelbare Baueinheit angeboten werden.

Die als Generator betreibbare elektrische Maschine ist erfindungsgemäß desweiteren permanent magneterregt ausgeführt. Dies bedeutet, daß keine zusätzlichen Maßnahmen zur Fremderregung erforderlich sind. Denkbar sind permanent magneterregte elektrische Maschinen in Form von
a) permanent magneterregten Synchronmaschinen
b) permanent magneterregten Asynchronmaschinen.

Vorzugsweise ist die als Generator betreibbare elektrische Maschine als permanent magneterregter Synchrongenerator ausgeführt. Diesem ist beim Einsatz in einem Antriebssystem eine Diodengleichrichtereinheit zugeordnet, so daß eine hinsichtlich Bauraum und Kosten günstig ausgelegte Gesamtantriebsvorrichtung entsteht, welche trotz eines linearen Zusammenhanges zwischen der Drehzahl des Generators und der verfügbaren Leistung in Abhängigkeit von der Betriebsweise der Verbrennungskraftmaschine und bei maximalem Strom am Generator in jedem Betriebszustand aus der im Zwischenkreis zur Verfügung stehenden Spannung die maximal mögliche Drehzahl an den Rädern erzeugen kann.

Die Verwendung einer Diodengleichrichtereinheit stellt dabei eine besonders kostengünstige und im Hinblick auf den Wirkungsgrad, den Bauraum und das Gewicht vorteilhafte Ausführung dar. Durch die Verwendung einer Transversalflußmaschine als Fahrmotor ergibt sich ein sehr großer bis theoretisch unendlicher Drehzahl-Stellbereich, was zur Folge hat, daß der mit den Rädern koppelbare Fahrmotor mit jeder zur Verfügung stehenden Spannung die maximale Drehzahl erzielen kann. Die Zwischenkreisspannung ist zwar durch die Verwendung von einem oder mehreren permanent magneterregten Synchrongeneratoren, welche den Gleichspannungszwischenkreis über Diodengleichrichtereinrichtungen speisen, abhängig von der Generatordrehzahl, jedoch durch Verwendung von bzw. wenigstens einer Transversalflußmaschine als Fahrmotor ohne nachteilige Konsequenzen für das Fahrverhalten.

Die erfindungsgemäße Lösung wird nachfolgend anhand von Figuren erläutert. Darin ist im Einzelnen folgendes dargestellt:
- Fig. 1: verdeutlicht in vereinfachter Darstellung ein Beispiel einer erfindungsgemäß ausgeführten Antriebsvorrichtung;
- Fig. 2a und 2b: zeigen mögliche Ausführungsformen einsetzbarer Drehzahl/Drehmomentwandlungseinrichtungen.

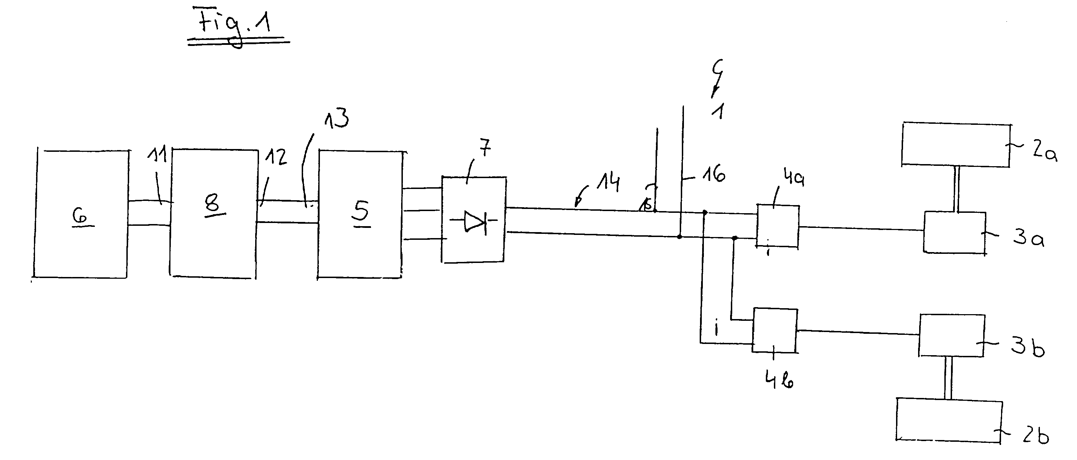

Die Figur 1 verdeutlicht in vereinfachter Darstellung ein Beispiel einer erfindungsgemäß ausgeführten Antriebsvorrichtung 1. Die Antriebsvorrichtung 1 umfaßt mindestens einen, mit einem Antriebsrad 2 eines Fahrzeuges 10 wenigstens mittelbar gekoppelten und als Radmotor fungierenden Elektromotor 3, welcher als Transversalflußmaschine ausgeführt sein kann, und der jeweils von einer Wechselrichtereinheit mit elektrischer Leistung versorgt wird. Im dargestellten Fall sind zwei Elektromotoren 3a und 3b vorgesehen, welche jeweils ein Rad 2a und 2b antreiben.

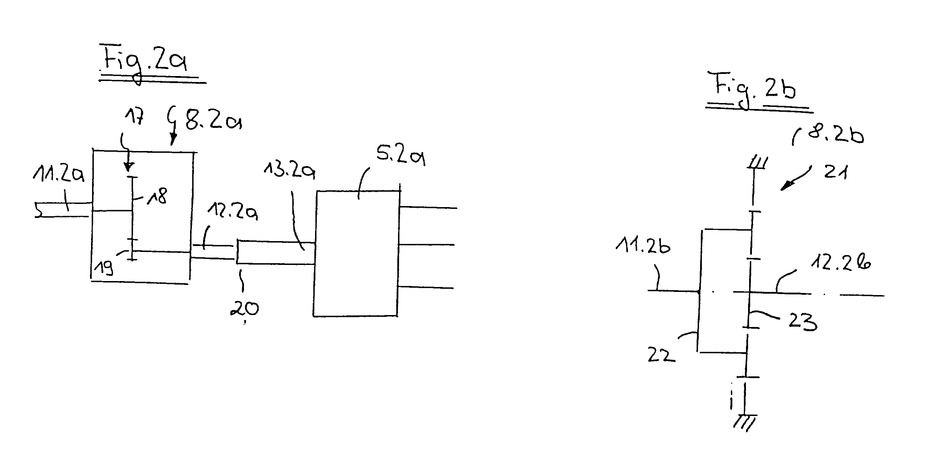

Des weiteren umfaßt die Antriebsvorrichtung 1 eine im Normalbetrieb, d.h. Antrieb der Räder 2a, 2b über die Verbrennungskraftmaschine 6, als Generator betreibbare elektrische Maschine, die nachfolgend als Generator 5 bezeichnet wird und erfindungsgemäß als permanent magneterregte Synchronmaschine ausgeführt ist. Der Generator ist mechanisch mit der Verbrennungskraftmaschine 6 wenigstens mittelbar koppelbar. Erfindungsgemäß ist der als Generator betreibbaren elektrischen Maschine eine Drehzahl-/Drehmomentenwandlungseinrichtung 8 zugeordnet, welche in Kraftflußrichtung von der Verbrennungskraftmaschine zu der als Generator betreibbaren elektrischen Maschine 5 zwischen diesen angeordnet ist. Eine Eingangswelle 11 der Drehzahl-/Drehmomentenwandlungseinrichtung ist dabei mit der Verbrennungskraftmaschine 6 koppelbar, während die Ausgangswelle 12 wenigstens mittelbar mit der Antriebswelle 13 des Generators 5 gekoppelt ist. Die Drehzahl/Drehmomentenwandlungseinrichtung 8 kann unterschiedlich ausgeführt sein. Bezüglich möglicher Ausführungen wird auf die Figuren 2a und 2b verwiesen. Die Figur 2a stellt dabei eine Drehzahl-/Drehmomentenwandlungseinrichtung 8.2a dar, welche wenigstens eine Stirnradstufe 17 umfaßt, die aus wenigstens zwei miteinander in Eingriff stehenden bzw. bringbaren Stirnrädern 18 und 19 besteht. Die Kopplung mit der Antriebswelle 13.2a der als Generator betreibbaren elektrischen Maschine 5 kann dabei direkt, beispielsweise über eine drehfeste Welle-Nabelverbindung 20, erfolgen. Denkbar ist auch die hier nicht dargestellte Möglichkeit der Zwischenschaltung einer schaltbaren Kupplung, welche die wahlweise Kopplung zwischen Drehzahl/Drehmomentenwandlungseinrichtung 8 und der Antriebswelle der als Generator betreibbaren elektrischen Maschine 5 ermöglicht.

Die Ausführung gemäß der Figur 2b zeigt demgegenüber eine Drehzahl/Drehmomentenwandlungseinrichtung 8.2b in Form eines Planetenradsatzes 21 und dessen mögliche Koppelung über den Steg 22 mit der Eingangswelle 11.2b der Drehzahl-/Drehmomentenwandlungseinrichtung 8.2b. Die Ausgangswelle 13.2b ist mit dem Sonnenrad 23 des Planetenradsatzes 21 gekoppelt.

Die erfindungsgemäße Zwischenschaltung eines Hochsetzgetriebes zwischen der Verbrennungskraftmaschine und der als Generator betreibbaren elektrischen Maschine kann unterschiedlich realisiert werden. Die konkrete Ausgestaltung der Drehzahl-/Drehmomentenwandlungseinrichtung, insbesondere hinsichtlich der Modifikation mit zusätzlichen Elementen zur Realisierung verschiedener Verfahrenskonzepte zum Betreiben einer derartigen Antriebsvorrichtung liegt entsprechend den Einsatzerfordernissen im Tätigkeitsfeld des zuständigen Fachmannes.

Für die Umwandlung des an der im Traktionsbetrieb als Generator betreibbaren elektrischen Maschine 5 erzeugten Wechsel- bzw. Drehstromes in Gleichstrom, der in den Zwischenkreis eingespeist wird, ist ein Gleichrichter in Form einer Diodengleichrichtereinheit, vorzugsweise einer Drehstrombrückenschaltung bzw. Diodengleichrichterbrücke 7, vorgesehen. Die Wechselrichter 4a, 4b für den oder die Radmotoren 3a, 3b und die Diodengleichrichtereinheit 7 für den Generator 5 sind über einen Spannungszwischenkreis in Form eines Gleichspannungszwischenkreises 8 miteinander gekoppelt. Im dargestellten Fall ist jedem Antriebsrad 2a bzw. 2b ein Elektromotor 3a bzw. 3b zugeordnet, der erfindungsgemäß als Transversalflußmaschine ausgeführt ist, und welcher jeweils von einer Wechselrichtereinheit 4a bzw. 4b mit elektrischer Leistung aus dem Gleichspannungszwischenkreis versorgt wird. Die in den Gleichspannungszwischenkreis 14 eingespeiste Gesamtleistung teilt sich dabei in wenigstens zwei Leistungsanteile auf - einen ersten Leistungsanteil und einen zweiten Leistungsanteil-, die an den beiden als Rad- bzw. Fahrmotoren 3a, 3b fungierenden Elektromotoren umgesetzt werden. Die Leistungsaufteilung erfolgt dabei entsprechend der Ansteuerung der Wechselrichtereinheiten 4a, 4b.

Die als Radmotoren fungierenden Elektromotoren 3a, 3b in Form von Transversalflußmaschinen können mit in der Verbrennungskraftmaschine 6 erzeugter Leistung und/oder mit in Brennstoffzellen gewonnener Leistung und/oder mit in Energiespeichereinrichtungen, z.B. in Form einer Batterie oder eines Schwungrades, gespeicherter Leistung gespeist werden. Dazu sind die entsprechenden Einheiten, Brennstoffzelle und/oder Energiespeichereinrichtung elektrisch mit dem Gleichspannungszwischenkreis über die beispielsweise dargestellten Leitungsstränge 15 und 16 gekoppelt.

Die Diodengleichrichtereinheit 7 ist durch verscheidene Diodenschaltungen darstellbar. Zur Erhöhung der Sperrspannung können mehrere einzelne Dioden gleichen Typs in Reihe geschaltet werden. Des weiteren besteht die Möglichkeit zur Erhöhung der Strombelastung eines Diodenzweiges, eine bestimmte Anzahl von Dioden gleichen Typs in einem Zweig parallelzuschalten.

Eine besonders bevorzugte Anwendung stellt die Verwendung einer sogenannten Drehstrombrückenschaltung dar. Diese wird durch Hintereinanderschaltung zweier Sternschaltungen mit 60° Phasenverschiebung gebildet. Infolge der Phasenverschiebung addieren sich dabei die beiden dreipulsigen Teilspannungen zu einer sechspulsigen Gleichspannung. Andere Ausführungen der Diodengleichrichtereinheiten sind ebenfalls denkbar. Wesentlich ist jedoch, daß es sich dabei um eine ungesteuerte Gleichrichtereinheit handelt, also keine Elemente in den Schaltungen enthalten sind, die sich gesteuert betreiben lassen.

Für die als Generator betreibbare elektrische Maschine 5, welche als Synchron-Maschine ausgeführt ist, bestehen bezüglich der Auswahl der Bauform eine Vielzahl von Möglichkeiten. Vorzugsweise findet ein Mehrphasengenerator, insbesondere ein Drehstromgenerator, Verwendung. Wesentlich ist jedoch immer, daß dieser permanentmagneterregt ist, d.h. keine Fremderregung vorhanden ist. Die Ausführung der Antriebsvorrichtung mit permanentmagneterregter Synchron-Maschine als Generator, einer dem Generator zugeordnete Diodengleichrichtereinheit sowie die Ausführung der Fahrmotoren als Transversalflußmaschinen, ermöglicht eine kostengünstige Ausführung einer Antriebsvorrichtung, insbesondere im Hinblick auf Wirkungsgrad, Bauraum und Gewicht. Die als Fahrmotoren bzw. Radmotoren fungierenden Elektromotoren sind in der Lage, bei jeder zur Verfügung stehenden Spannung die maximale Drehzahl, d.h. Antriebsdrehzahl für die Räder, welche proportional der Fahrgeschwindigkeit ist, zu erzielen. Trotz des linearen Zusammenhanges zwischen der Drehzahl der als Generator betreibbaren elektrischen Maschine 5 und der verfügbaren Leistung im Hinblick auf das Verhalten einer Verbrennungskraftmaschine als Antrieb und bei maximalen Strom an der als Generator betreibbaren elektrischen Maschine kann in jedem Betriebszustand die maximal mögliche Drehzahl an den anzutreibenden Rädern erzeugt werden.

Die konkrete Ausgestaltung der Synchron-Maschine und der Diodengleichrichtereinheit, sowie die konstruktive Gestaltung des gesamten Antriebssystems liegt im Ermessen des zuständigen Fachmannes.

## Patentansprüche

1. Antriebsvorrichtung für einen Hybridantrieb, insbesondere für Fahrzeuge
1.1 mit einer, mit einer Verbrennungskraftmaschine mechanisch wenigstens mittelbar koppelbaren als Generator betreibbaren elektrischen Maschine; gekennzeichnet durch die folgenden Merkmale:
1.2 die elektrische Maschine ist als permanent magneterregte Maschine ausgeführt;
1.3 zwischen der Verbrennungskraftmaschine und der elektrischen Maschine ist eine Drehzahl-/Drehomomentenwandlungseinrichtung vorgesehen, welche eine Übersetzung der Abtriebsdrehzahl der Verbrennungskraftmaschine gegenüber der Antriebsdrehzahl des Generators ins Schnelle bewirkt.

2. Antriebsvorrichtung nach Anspruch 1, dadurch gekennzeichnet, daß die Drehzahl-/Drehmomentenwandlungseinrichtung ein mechanisches Getriebe ist.

3. Antriebsvorrichtung nach einem der Ansprüche 1 oder 2, dadurch gekennzeichnet, daß die Drehzahl/Drehmomentenwandlungseinrichtung wenigstens einen Planetenradgetriebesatz umfaßt.

4. Antriebsvorrichtung nach einem der Ansprüche 1 bis 3, dadurch gekennzeichnet, daß die Drehzahl/Drehmomentenwandlungseinrichtung wenigstens eine Stirnradstufe umfaßt.

5. Antriebsvorrichtung nach einem der Ansprüche 1 bis 4, dadurch gekennzeichnet, daß in Kraftflußrichtung von der Verbrennungskraftmaschine zum Generator der Drehzahl/Drehmomentenwandlungseinrichtung eine schaltbare Kupplung vorgeschalten ist.

6. Antriebsvorrichtung nach einem der Ansprüche 1 bis 4, dadurch gekennzeichnet, daß in Kraftflußrichtung von der Verbrennungskraftmaschine zum Generator der Drehzahl/Drehmomentenwandlungseinrichtung eine schaltbare Kupplung nachgeordnet ist.

7. Antriebsvorrichtung nach einem der Ansprüche 5 oder 6, dadurch gekennzeichnet, daß die schaltbare Kupplung mit der Drehzahl/Drehmomentenwandlungseinrichtung eine bauliche Einheit bildet.

8. Antriebsvorrichtung nach einem der Ansprüche 1 bis 7, dadurch gekennzeichnet, daß zwischen Verbrennungskraftmaschine und der als Generator betreibbaren elektrischen Maschine Mittel zur Schwingungsdämpfung angeordnet sind.

9. Antriebsvorrichtung nach einem der Ansprüche 1 bis 8, dadurch gekennzeichnet, daß die als Generator betreibbare elektrische Maschine eine permanent erregte Synchronmaschine ist.

10. Antriebsvorrichtung nach einem der Ansprüche 1 bis 9, dadurch gekennzeichnet, daß die elektrische Maschine eine Transversalflußmaschine ist.

11. Antriebsvorrichtung nach einem der Ansprüche 1 bis 10, gekennzeichnet durch die folgenden Merkmale:
11.1 mit wenigstens einem, mit wenigstens einem Antriebsrad wenigstens mittelbar koppelbaren Elektromotor;
11.2 jeder Elektromotor und die als Generator betreibbare elektrische Maschine sind über einen Spannungszwischenkreis miteinander elektrisch gekoppelt;
11.3 die elektrische Kopplung umfaßt wenigstens eine Wechselrichtereinheit, die einem oder den Elektromotoren zugeordnet ist;
11.4 die elektrische Kopplung umfaßt des weiteren eine Diodengleichrichtereinheit, welche der als Generator betreibbaren elektrischen Maschine zugeordnet ist.

12. Antriebsvorrichtung nach Anspruch 11, dadurch gekennzeichnet, daß die Diodengleichrichtereinheit als ungesteuerte Drehstromgleichrichterbrücke ausgeführt ist.

13. Antriebsvorrichtung nach Anspruch 12, dadurch gekennzeichnet, daß die Diodengleichrichtereinheit zwei hintereinander geschaltete Sternschaltungen mit 60° Phasenverschiebung umfaßt.

14. Antriebsvorrichtung nach einem der Ansprüche 11 bis 13, dadurch gekennzeichnet, daß die Diodengleichrichtereinheit mit der als Generator betreibbaren elektrischen Maschine eine bauliche Einheit bildet.
